# FASCICULE DE BREVET EUROPEEN

(11) **EP 0 934 585 B1**
(45) Date de publication et mention de la délivrance du brevet: **15.05.2002**
(21) Numéro de dépôt: 96939975.7
(22) Date de dépôt: 26.11.1996
(51) Int. Cl.: G11B 7/00, G11B 7/125

(54) **DISPOSITIF DE LECTURE OPTIQUE D'INFORMATIONS NUMERIQUES SUR UN SUPPORT, NOTAMMENT DISPOSITIF DE LECTURE DE DISQUE A LECTURE LASER**
VORRICHTUNG ZUM OPTISCHEN LESEN VON DIGITALER INFORMATION AUF EINEM TRÄGER, INSBESONDERE VORRICHTUNG ZUM LESEN EINER PLATTE MIT HILFE EINES LASERS
DEVICE FOR OPTICALLY READING DIGITAL DATA FROM A MEDIUM, PARTICULARLY A LASER DISK READER DEVICE

(30) Priorité: 04.12.1995 FR 9514317
(43) Date de publication de la demande: 11.08.1999
(73) Titulaire: Andre, Yves-Bernard, 91440 Bures-sur-Yvette (FR)
(72) Inventeur: Andre, Yves-Bernard, 91440 Bures-sur-Yvette (FR)
(74) Mandataire: Michardière, Bernard
(86) Numéro de dépôt international: FR9601865
(87) Numéro de publication internationale: WO9721214

(56) Documents cités:
- EP-A- 0 384 358
- FR-A- 2 627 311
- US-A- 5 485 441
- PATENT ABSTRACTS OF JAPAN vol. 004, no. 134 (P-028), 19 Septembre 1980 & JP 55 084909 A (RICOH CO LTD), 26 Juin 1980,

## Description

L'invention est relative à un dispositif de lecture optique d'informations numériques sur un support réléchissant, ce dispositif étant du genre de ceux qui comprennent une source d'éclairage, des moyens de focalisation du faisceau émis par la source sur une zone du support, des moyens de réception de l'énergie lumineuse réfléchie et des moyens de traitement des signaux fournis par les moyens de réception.

L'invention concerne plus particulièrement, mais non exclusivement, un tel dispositif de lecture optique pour disques à lecture laser, notamment pour disques audio.

Les avantages des supports d'informations numériques à lecture optique sont connus. Ces supports permettent de stocker sous un volume réduit un grand nombre d'informations. L'accès à ces informations est rapide et la lecture qui ne fait intervenir aucun contact mécanique n'entraîne pas d'usure du support. En outre, la qualité de restitution des informations s'est trouvée accrue.

Cependant, la numérisation des informations fait intervenir un échantillonnage qui, pour les faibles niveaux d'amplitude du signal analogique avant numérisation, peut introduire des pertes d'information. En outre, le transfert des informations numériques sur le support s'accompagne nécessairement d'imprécisions de fabrication, malgré toutes les précautions prises.Aussi, les moyens de traitement des signaux prévus dans le dispositif de lecture font intervenir un ou plusieurs algorithmes visant à compenser les pertes d'information dues aux imperfections inévitables de réalisation, et à améliorer les signaux restitués.

On constate toutefois, à la restitution des informations, que des points restent à améliorer. En particulier, dans le cas de disques audio à lecture laser, on s'accorde à trouver une certaine sécheresse et une certaine dureté aux sons restitués.

Le brevet JP-A-55084909, divulguant les caractéristiques du préambule de la revendication 1, décrit une technique de reproduction d'informations à partir d'un disque optique, basée sur l'utilisation de deux rayons laser de longueurs d'onde différentes et focalisées sur la même zone à reproduire.

L'invention a pour but, surtout, de fournir un dispositif de lecture optique par réflexion, du genre défini précédemment qui permette de réduire les inconvénients exposés ci-dessus, tout en restant simple et d'un prix de revient relativement réduit.

Selon l'invention, un dispositif de lecture optique d'informations numériques sur un support réfléchissant, du genre défini précédemment, est caractérisé par le fait qu'il comporte au moins un deuxième moyen d'éclairage non focalisé installé sur le, ou près du, dispositif de lecture de manière à éclairer, par son faisceau, la zone du support où a lieu la focalisation de la source, la longueur d'onde et la puissance lumineuse de ce deuxième moyen d'éclairage étant choisies de telle sorte que la restitution des informations soit améliorée.

On a constaté, de manière surprenante, que la mise en place de ce deuxième moyen d'éclairage non focalisé réduisait les inconvénients évoqués précédemment ; en particulier, dans le cas d'un dispositif de lecture optique pour disques à lecture laser, on a constaté à l'écoute une différence sensible dans la restitution des sons, le dispositif de l'invention améliorant la douceur de restitution et effaçant en grande partie la sécheresse et la dureté généralement reprochées à la lecture de ce type de disques.

La plage de longueur d'onde du deuxième moyen d'éclairage est située, de préférence, dans un domaine complémentaire de la plage de longueur d'onde de la source d'éclairage.

Dans le cas d'une source émettant dans le rouge ou l'infra-rouge, de bons résultats sont obtenus avec un deuxième moyen d'éclairage émettant dans la plage du bleu du spectre visible. En particulier, le deuxième moyen d'éclairage émet à une longueur d'onde de 430 nanomètres.

Des moyens de réglage de la puissance lumineuse d'émission du deuxième moyen d'éclairage sont avantageusement prévus.

Ce deuxième moyen d'éclairage est de préférence constitué par une diode électroluminescente. Cette diode est montée dans un circuit d'alimentation en série avec une résistance réglable. L'utilisateur peut agir sur le réglage de cette résistance, notamment dans le cas de la lecture d'un disque audio, pour obtenir la restitution qui lui apparaît préférable à l'écoute.

Le dispositif de l'invention peut s'appliquer non seulement aux disques audio à lecture laser, mais aussi aux disques vidéo à lecture laser.

L'invention consiste, mises à part les dispositions exposées ci-dessus, en un certain nombre d'autres dispositions dont il sera plus explicitement question ci-après à propos d'un exemple de réalisation décrit avec références au dessin ci-annexé, mais qui n'est nullement limitatif.

La figure 1, de ce dessin, est un schéma simplifié d'un dispositif de lecture optique selon l'invention.

La figure 2, enfin, est un schéma du circuit d'alimentation du deuxième moyen d'éclairage.

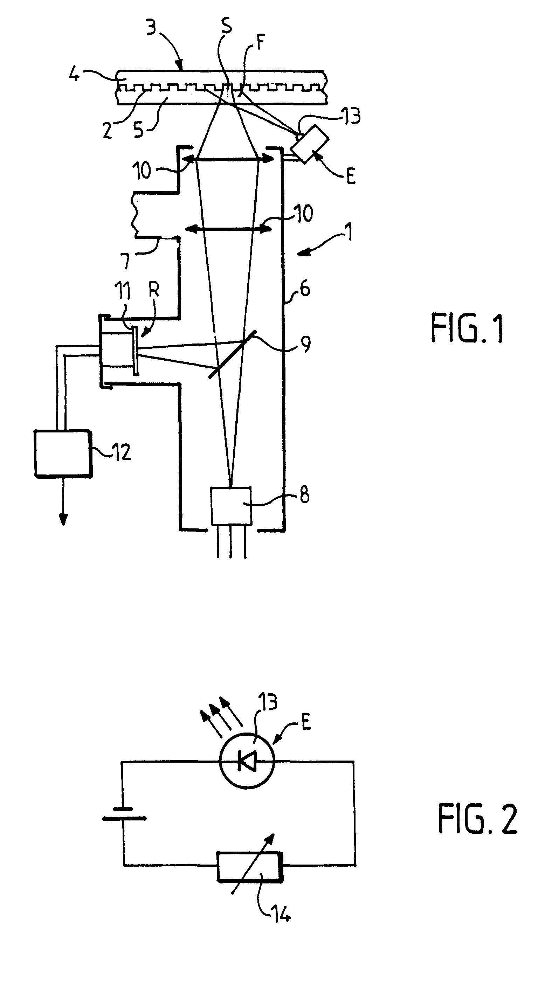

En se reportant à la figure 1 du dessin on peut voir un dispositif 1 de lecture optique par réflexion d'informations numériques 2 sur un support 3. Dans l'exemple considéré le support 3 est un disque audio à lecture laser qui comporte une couche mince métallisée 4 réfléchissante sur laquelle les informations numériques 2 correspondant à des "0" ou à des "1" sont constituées par des microcuvettes(ou "pits") ou par des zones planes de la surface métallisée. Dans l'exemple considéré, les informations numériques 2 sont tournées vers le bas et la couche métallisée 4 est recouverte, au-dessous, par une couche 5 transparente notamment en polycarbonate. Le dispositif de lecture 1 est situé au-dessous du disque 3 avec son axe optique perpendiculaire au plan moyen du disque. Les informations numériques 2 sont inscrites suivant une piste en spirale. Le disque 3 est mis en rotation pour la lecture tandis que le dispositif de lecture 1 est déplacé radialement.

Le dispositif de lecture 1 comporte, de manière classique, un bâti 6, supporté par des moyens 7 sommairement représentés permettant son déplacement radial relativement au disque 3. Le bâti 6, de forme générale cylindrique, d'axe perpendiculaire au disque 3, comporte à sa partie inférieure une source d'éclairage laser 8.Cette source laser 8 peut émettre , par exemple, dans le rouge ou l'infra-rouge, ou dans le bleu. Le faisceau laser est dirigé vers le disque 3 et traverse un dispositif optique 9 semi-réfléchissant, schématiquement représenté, pouvant être constitué par un prisme. Un système optique 10, avec des moyens d'asservissement non représentés, assure la focalisation du faisceau sur les informations numériques 2. Le faisceau subit une réfraction à l'interface de l'air et de la couche transparente 5. Le spot focalisé S du faisceau laser a des dimensions réduites, de l'ordre de deux micromètres, en correspondance avec les dimensions des zones de la surface 4 constituant les informations numériques 2. Selon que le faisceau rencontre une zone de surface plane de la couchè 4 ou une zone correspondant à une microcuvette, la réflexion sera plus ou moins forte, et se traduira à la lecture, par une information numérique différente, par exemple "1" ou "0".

La lumière réfléchie revient sur le dispositif semi-réfléchissant 9 et est déviée à angle droit sur des moyens de réception R de l'énergie lumineuse réfléchie constitués par une photodiode de lecture 11. Les signaux provenant de la photodiode 11 sont envoyés à des moyens de traitement 12 informatiques faisant intervenir des algorithmes appropriés pour apporter les corrections nécessaires et compenser les manques d'information dans certaines zones de la couche métallisée 4. Les signaux sortant des moyens de traitement 12 servent ensuite à restituer les sons.

Selon l'invention, un deuxième moyen d'éclairage E, non focalisé, est installé sur le, ou près du, dispositif de lecture 1 de manière à éclairer par son faisceau F la zone de focalisation S de la source 8 sur le support 3, 4. La tache du faisceau lumineux F sur la couche métallisée 4 a une dimension nettement supérieure à celle du spot focalisé S de la source 8 et déborde autour de ce spot. Le deuxième moyen d'éclairage E est fixé, par exemple au bâti 6, de manière à se déplacer avec le dispositif de lecture 1.

D'une manière surprenante, on a constaté que par le choix de la longueur d'onde et, accessoirement, de la puissance lumineuse de ce moyen d'éclairage E, la restitution du son est améliorée. A l'écoute, les sons produits par un dispositif selon l'invention présentent plus de douceur qu'en l'absence du deuxième moyen d'éclairage E.

La plage de longueur d'onde du deuxième moyen d'éclairage E est de préférence située dans un domaine complémentaire de la plage de longueur d'onde de la source d'élairage 8. Dans le cas d'une source laser 8 émettant dans le rouge ou l'infra-rouge, le deuxième moyen d'éclairage E émet de préférence dans la plage du bleu du spectre visible, en particulier à une longueur d'onde de 430 nanomètres. Ce deuxième moyen d'éclairage E est avantageusement constitué par une diode électroluminescente 13.

Comme illlustré sur la figure 2, la diode 13 est montée dans un circuit d'alimentation électrique comprenant une résistance réglable 14, constituant un moyen de réglage sur lequel l'utilisateur peut agir pour optimiser l'intensité lumineuse de la diode 13 et ajuster ainsi l'effet sur les sons restitués. Il convient que l'énergie lumineuse reçue par la photodiode de lecture 11, en provenance du deuxième moyen d'éclairage E,13, soit nettement plus faible que celle en provenance de la source 8.

On pense que ce deuxième moyen d'éclairage constitué par la diode électroluminescente 13 introduit un bruit de fond moyenné qui permet à l'ensemble du système d'être plus sélectif et de mieux restituer des informations numériques, qui , en l'absence de ce deuxième moyen d'éclairage, seraient considérées comme des "0" alors qu'il s'agit de "1" dont l'information 2 inscrite sur la couche 4 est plus
ou moins altérée.

Une augmentation de la puissance de la source laser 8 ne produirait pas un effet comparable à celui du deuxième moyen de lecture E non focalisé, car une telle augmentation de puissance de la source laser s'accompagnerait d'une augmentation des parasites.

Le deuxième moyen d'éclairage E pourrait être réalisé avec plusieurs diodes électroluminescentes ou moyens équivalents.

## Revendications

1. Dispositif de lecture optique d'informations numériques sur un support réfléchissant (4), comprenant une source d'éclairage (8), des moyens de focalisation (10) du faisceau émis par la source sur une zone (S) du support, des moyens de réception (R) de l'énergie lumineuse réfléchie et des moyens de traitement (12) des signaux fournis par les moyens de réception, **caractérisé par le fait qu'**il comporte au moins un deuxième moyen d'éclairage (E) non focalisé installé sur le, ou près du, dispositif de lecture (1) de manière à éclairer par son faisceau (F) la zone de focalisation (S) de la source (8) sur le support (4), la longueur d'onde et la puissance lumineuse de ce deuxième moyen d'éclairage (E) étant choisies de telle sorte que la restitution des informations soit améliorée.

2. Dispositif selon la revendication 1, **caractérisé par le fait que** la plage de longueur d'onde du deuxième moyen d'éclairage (E) est située dans un domaine complémentaire de la plage de longueur d'onde de la source d'éclairage (8).

3. Dispositif selon la revendication 1 ou 2 dans lequel la source d'éclairage (8) émet dans le rouge ou l'infra-rouge, **caractérisé par le fait que** le deuxième moyen d'éclairage (E) émet dans la plage du bleu du spectre visible.

4. Dispositif selon la revendication 3, **caractérisé par le fait que** le deuxième moyen d'éclairage (E) émet à une longueur d'onde de 430 nanomètres.

5. Dispositif selon l'une des revendications précédentes, **caractérisé par le fait qu'**il comporte des moyens de réglage (14) de la puissance lumineuse d'émission du deuxième moyen d'éclairage (E).

6. Dispositif selon l'une des revendications précédentes, **caractérisé par le fait que** le deuxième moyen d'éclairage (E) est constitué par une diode électroluminescente (13).

7. Dispositif selon l'ensemble des revendications 5 et 6, **caractérisé par le fait que** la diode électroluminescente (13) du deuxième moyen d'éclairage (E) est montée dans un circuit d'alimentation en série avec une résistance réglable (14), pour en optimiser l'intensité lumineuse.

8. Dispositif de lecture selon l'une quelconque des revendications précédentes comportant une source d'éclairage (8) laser pour la lecture de disques audio.

9. Dispositif selon l'une quelconque des revendications 1 à 7 comportant une source d'éclairage (8) laser pour la lecture de disques vidéo.

## Patentansprüche

1. Vorrichtung zum optischen Lesen digitaler Informationen auf einem reflektierenden Träger (4), mit einer Beleuchtungsquelle (8), eine Einrichtung (10) zum Fokussieren des von der Quelle ausgegebenen Strahls auf eine Zone (S) des Trägers, einer Einrichtung (R) zum Empfangen der reflektierten Lichtenergie und einer Einrichtung (12) zum Verarbeiten von durch die Empfangseinrichtung gelieferten Signalen, **dadurch gekennzeichnet, daß** sie wenigstens eine zweite, nicht fokussierte Beleuchtungseinrichtung (E) aufweist, die an oder nahe der Lesevorrichtung (1) derart installiert ist, daß sie mit ihrem Strahl (F) die Fokussierungszone (S) der Quelle (8) auf dem Träger (4) beleuchtet, wobei die Wellenlänge und die Leuchtkraft der zweiten Beleuchtungseinrichtung (E) derart gewählt sind, daß die Wiedergewinnung von Informationen verbessert ist.

2. Vorrichtung nach Anspruch 1, **dadurch gekennzeichnet, daß** der Wellenlängenbereich der zweiten Beleuchtungseinrichtung (E) in einer zum Wellenlängenbereich der Beleuchtungsquelle (8) komplementären Domäne liegt.

3. Vorrichtung nach Anspruch 1 oder 2, bei der die Beleuchtungsquelle (8) im Rot- oder Infrarotlichtbereich emittiert, **dadurch gekennzeichnet, daß** die zweite Beleuchtungseinrichtung (E) im blauen Bereich des sichtbaren Spektrums emittiert.

4. Vorrichtung nach Anspruch 3, **dadurch gekennzeichnet, daß** die zweite Beleuchtungseinrichtung (E) mit einer Wellenlänge von 430 Nanometer emittiert.

5. Vorrichtung nach einem der vorhergehenden Ansprüche, **dadurch gekennzeichnet, daß** sie Einrichtungen (14) zum Regeln der Leuchtkraft der Emission der zweiten Beleuchtungseinrichtung (E) aufweist.

6. Vorrichtung nach einem der vorhergehenden Ansprüche, **dadurch gekennzeichnet, daß** die zweite Beleuchtungseinrichtung (E) durch eine Elektrolumineszenzdiode (13) gebildet ist.

7. Vorrichtung nach den Ansprüchen 5 und 6, **dadurch gekennzeichnet, daß** die Elektrolumineszenzdiode (13) der zweiten Beleuchtungseinrichtung (E) in einem Speisekreis in Reihe mit einem regelbaren Widerstand (14) angeordnet ist, um deren Lichtstärke zu optimieren.

8. Lesevorrichtung nach einem der vorhergehenden Ansprüche mit einer Laserlichtquelle (8) zum Lesen von Audio-Discs.

9. Lesevorrichtung nach einem der Ansprüche 1 bis 7 mit einer Laserlichtquelle (8) zum Lesen von Video-Discs.

## Claims

1. Optical reading device for reading digital data from a reflecting medium (4), comprising a lighting source (8), means (10) for focusing the beam emitted by the source onto an area (S) of the medium, means (R) for receiving the light energy reflected and means (12) for processing the signals delivered by the receiving means, **characterized in that** it comprises at least one second unfocused lighting means (E) installed on or near the reading device (1) so as to use its beam (F) to illuminate the focusing area (S) of the source (8) on the medium (4), the wavelength and the luminous power of this second lighting means (E) being chosen in such a way that the reproduction of the data is improved.

2. Device according to Claim 1, **characterized in that** the wavelength range of the second lighting means (E) lies in a region complementary to the wavelength range of the lighting source (8).

3. Device according to Claim 1 or 2, in which the lighting source (8) emits in the red or the infrared, **characterized in that** the second lighting means (E) emits in the blue range of the visible spectrum.

4. Device according to Claim 3, **characterized in that** the second lighting means (E) emits at a wavelength of 430 nanometers.

5. Device according to one of the preceding claims, **characterized in that** it comprises means (14) for adjusting the luminous power of emission of the second lighting means (E).

6. Device according to any one of the preceding claims, **characterized in that** the second lighting means (E) consists of a light-emitting diode (13).

7. Device according to Claims 5 and 6 together, **characterized in that** the light-emitting diode (13) of the second lighting means (E) is mounted in a supply circuit in series with an adjustable resistor (14) so as to optimize the luminous intensity thereof.

8. Reading device according to any one of the preceding claims, comprising a laser lighting source (8) for reading audio disks.

9. Device according to any one of Claims 1 to 7, comprising a laser lighting source (8) for reading video disks.
